# EUROPÄISCHE PATENTANMELDUNG

(11) **EP 0 845 292 A1**
(43) Veröffentlichungstag der Anmeldung: **03.06.1998**
(21) Anmeldenummer: 97120609.9
(22) Anmeldetag: 25.11.1997
(51) Int. Cl.: B01F 7/06, B01F 7/08, B01F 17/02, B29B 7/26, B29B 7/18

(54) **Innenmischer zur Verarbeitung von Kautschuk- oder kautschukähnlichen Kunststoffmischungen**

(30) Priorität: 29.11.1996 DE 19649493
(71) Anmelder: Continental Aktiengesellschaft, 30165 Hannover (DE)
(72) Erfinder: Heine, Helmut, 30926 Seelze (DE); Mössinger, Jürgen, 30938 Burgwedel (DE)

(57) **Zusammenfassung**

Innenmischer zur Verarbeitung von Kautschuk- oder kautschukähnlichen Kunststoffmischungen,
- mit einer von einem Kammergehäuse begrenzten Mischkammer,
- mit zwei in der Mischkammer im wesentlichen parallel zueinander ausgerichteten Rotorwellen,
- mit einer im Kammergehäuse im wesentlichen oberhalb mittig zwischen den Rotorwellen ausgebildeten Einfüllöffnung (5),
- mit in der Einfüllöffnung verschiebbar ausgebildetem Stempel (8) zum Öffnen und Schließen der Einfüllöffnung (5),
- mit unterhalb der Rotoren im wesentlichen mittig zwischen den Rotoren ausgebildeten zum Öffnen und Schließen des Kammergehäuses bewegbarem Auslaßsattel (17),
- wobei die Kontur (46) des Sattels in einer Schnittfläche im wesentlichen senkrecht zu den Drehachsen der Rotoren in Schließstellung des Sattels an der zur Kammer weisenden Stirnfläche des Sattels (17) derart ausgebildet ist, daß sie von den beiden Rändern der Stirnfläche zur Sattelmitte hin jeweils einen von der Kammer wegweisenden konkavern Verlauf einnimmt und an den Rändern der Stirnfläche einen Winkel β größer oder gleich 0° zur Verbindungsgeraden der beiden Ränder einschließt.

## Beschreibung

Die Erfindung betrifft einen Innenmischer zur Verarbeitung von Kautschuk- oder von kautschukähnlichen Kunststoffmischungen mit einer von einem Kammergehäuse begrenzten Mischkammer mit zwei in der Mischkammer im wesentlichen parallel zueinander ausgerichteten Rotoren mit einer im Kammergehäuse im wesentlichen oberhalb mittig zwischen den Drehachsen der Rotoren ausgebildeten Einfüllöffnung und einem in der Einfüllöffnung zum Öffnen und Schließen der Einfüllöffnung verschiebbar ausgebildeten Stempel und mit unterhalb der Rotoren im wesentlichen mittig zwischen den Rotoren ausgebildeten zum Öffnen und Schließen des Kammergehäuses bewegbarem Auslaßsattel.

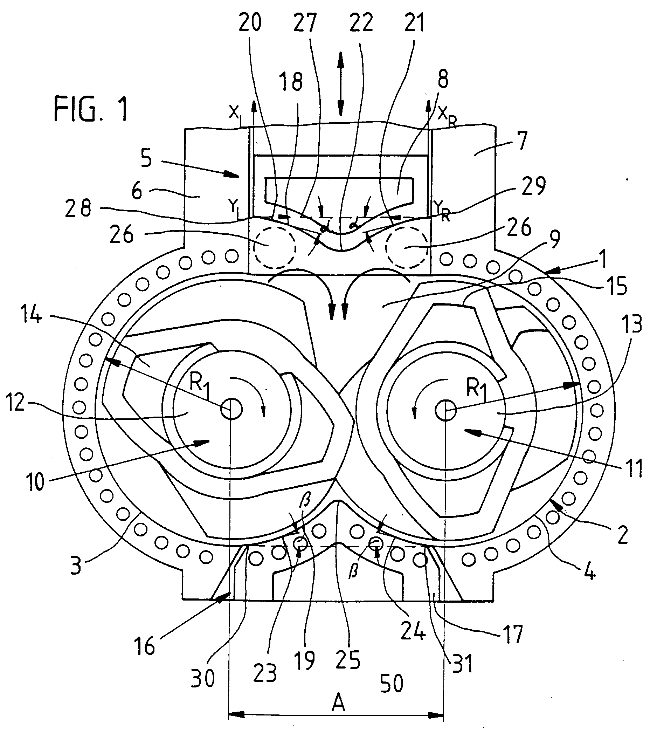

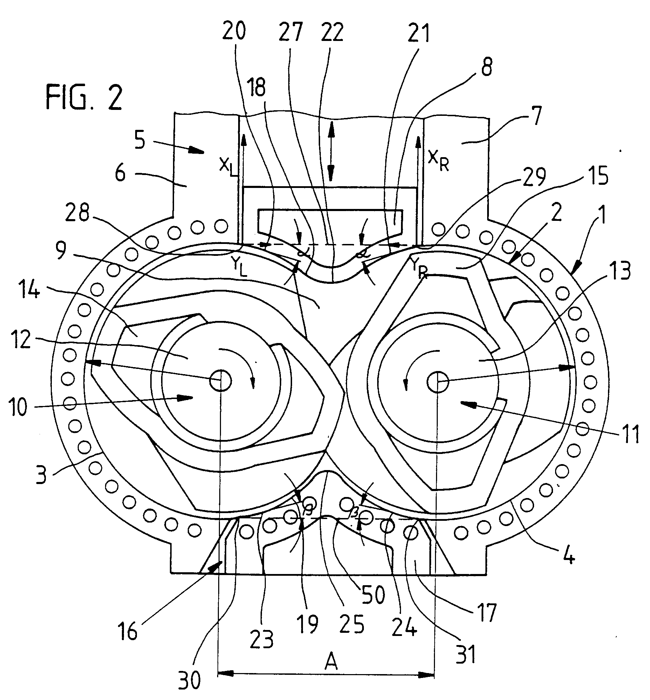

Die Mischkammern derartiger Innenmischer sind üblicherweise mit ihrer Innenkontur im wesentlichen an die Kontor der Mantelfläche, die die Rotoren mit ihrem Außenradius beim Mischen beschreiben, angepaßt, so daß das Kautschuk- oder kautschukähnliche Kunststoffmaterial durch die Rotoren sicher bei deren Rotation mitgenommen und vermischt wird. Daher sind Innenkonturen derartiger Innenmischer üblicherweise, wie in Figuren 1 und 2 dargestellt ist, so ausgebildet, daß sie die Hüllkontur zweier sich berührender oder sich schneidender zylindrischer Kammerhälften einnehmen, wobei jeder Zylinder im wesentlichen konzentrisch zu jeweils einem Rotor ausgebildet ist. Es ist bekannt, derartige Innenmischer mit zwei parallelen im wesentlichen horizontal nebeneinander angeordneten Rotoren durch einen Einfüllschacht, der sich im wesentlichen mittig zu beiden Rotoren oberhalb der Rotoren vom Kammerinnern durch das Kammergehäuse nach außen erstreckt mit Mischungsmaterial und Zusätzen zu beschicken. Um eine optimale Verteilung des Beschickungsmaterials über die gesamte Längserstreckung der Rotoren zu erzielen, erstrecken sich derartige Einzelöffnungen im wesentlichen parallel zu den Rotoren über die gesamte Kammerlänge. Mit Hilfe eines Stempels, der in der Einfüllöffnung nach oben und unten verschiebbar ausgebildet ist, wird das eingefüllte Material nach Beschickung unter Schließung der Kammer nach innen in die Mischkammer gepreßt.

Der Stempel und der Sattel bilden in ihrem geschlossenen Zustand mit ihrer zur Kammer weisenden Stirnfläche üblicherweise im wesentlichen die Fortführung der Innenkontur der Kammer, so daß sie den durch die Einfüllöffnung und die Auslaßöffnung bedingten Spalt im Kammergehäuse hinsichtlich der sich berührenden bzw. sich schneidenden zylindrischen Konturen, die die Kammerkontur bilden, überbrücken. Da die Einfüllöffnung, die Auslaßöffnung, der Stempel und der Sattel in derartigen Innenmischern zwischen den beiden Rotoren angeordnet sind, sind die zur Kammer hinweisende Stirnfläche derartiger Stempel und Sattel in ihren Querschnitten in Schnittflächen quer zur Achsausrichtung der Rotoren derart ausgebildet, daß von den beiden Rändern der Querschnittskontur zum Stempelinnern bzw. Sattelinnern die Kontur in ihrem Konturverlauf stetig in Richtung zum Kammerinnern steigt. Das heißt, die gesamte Konturlinie liegt jeweils auf der zum Kammerinnern weisenden Seite der Verbindungsgeraden der beiden Randpunkte und bildet, wie in Fig. 1 und 2 zu erkennen ist, eine einzige nach innen zum Innenmischer hin gerichtete konvexe Nase, bei der sinusverlaufähnlich die Ränder des Stempels bzw. Sattels benachbarte Minima und die Mitte des Stempels bzw. Sattels das dazwischenliegende Maximum darstellen.

Die mit einer derartigen Kontur ausgebildeten herkömmlichen Stempel und Sattel ermöglichen bei vollständig geschlossenem Stempel prinzipiell ein sehr zufriedenstellendes Mischergebnis, da auch im Bereich unterhalb des Stempels bei vollständig geschlossenem Stempel das im Kammerinnern befindliche, zu mischende Material von den an den durch die Kammer, den Stempel und den Sattel gebildeten, an die Hüllkurve des Rotors optimiert angepaßten Kammerwänden entlangstreifenden Rotoren sicher erfaßt und vermischt wird.

Der für den Mischzyklus von der Einleitung der Mischung bis zur Beendigung des Mischungsvorganges zur Verfügung stehende Zeitraum setzt sich aus Beschickungszeit und Mischzeitzusammen. Während der Beschickungszeit wird zunächst Mischungsmaterial in das Innere eingefüllt, der Stempel hydraulisch oder pneumatisch soweit als möglich geschlossen. Das noch nicht durchgemischte Material übt dabei einen so großen Druck auf den Stempel aus, daß der Stempel zunächst nicht vollständig zu schließen ist. Nach Vormischen der Mischungsmaterialien durch Drehen der Rotoren bei somit nicht ganz geschlossenem Stempel wird der Stempel abgehoben. Nach Anheben des Stempels werden weitere Zusätze entsprechend den Anforderungen an die Mischung, beispielsweise an eine Reifenkautschukmischung, z.B. Beschleunigerstoffe, zugegeben. Danach wird der Stempel wieder soweit als möglich geschlossen, wobei er üblicherweise jedoch immer noch nicht vollständig geschlossen ist. Bei dem nachfolgenden Mischprozeß steigen üblicherweise die Temperatur und der Druck in der Kammer, so daß der Stempel zunächst aufgrund des hohen Druckes in der Kammer noch einmal in der Einfüllöffnung angehoben wird. Erst nach weiterem Mischen in der Kammer sinkt der Stempel langsam aufgrund des abfallenden Innendruckes in seine Schließstellung ab. Erst wenn der Stempel vollständig in seine Schließstellung abgesunken ist, ist die eigentliche Beschickungszeit beendet. Bei einer Vielzahl herkömmlicher Mischungen nimmt die Beschickungszeit einen Großteil der für den gesamten Mischzyklus zur Verfügung stehenden Zeitspanne in Anspruch. Erst danach in dem relativ kurzen zum vollständigen Mischen zur Verfügung stehenden Zeitraum ist der Stempel vollständig geschlossen und die Stempelkontur und die zylindrischen Kammerwände bilden einen im wesentlichen geschlossenen der Bewegungskontur der Außenradien der beiden Rotoren angepaßte Kammerkontur, so daß eine sichere Mitnahme des unterhalb des Stempels befindlichen Kautschuk- oder kautschukähnlichen Masterials und der zugesetzten Zugaben an Stoffen sicher gewährleistet ist. Die Vorteile der Kontur derartiger Stempel kommen erst in diesem späten Stadium des Mischungszyklus zum Tragen.

In dem vorausgegangenen langen Zeitraum der Beschickungszeit, in der der Stempel nicht vollständig geschlossen ist, bilden sich aufgrund der von den beiden Rändern des Stempels zur Stempelmitte verlaufend ins Kammerinnere hin stetig ansteigende Konturen in der zum Kammerinnern weisenden Stirnfläche des Stempels in einem Querschnitt senkrecht zu den Rotorwellen gesehen in dem spitzen Winkelbereich zwischen den ansteigenden Konturbereichen an den Rändern und den Wänden des Einfüllschachtes tote, inaktive Zonen, in denen kein Mischvorgang stattfindet. Dies hat zur Folge, daß nach Ablauf der langen Beschickungszeit, in der der Stempel nicht geschlossen ist, das Kautscxhuk- oder kautschukähnliche Material und die Zugaben, soweit sie unterhalb des Stempels im Einfüllschacht in den beiden Randbereichen des Stempels gesammelt sind, nahezu unvermischt sind. Diese gesamten unvermischten Materialmengen müssen nun in der kurzen zum eigentlichen Mischen verbleibenden Zeitspanne noch so vollständig unter das Restmaterial gemischt werden, daß eine gleichmäßige Mischungsqualität erzielt wird.

Dies hat zur Folge, daß zumindest bei Problemmischungen entweder die verbleibende Mischzeit zur vollständigen Mischung nicht ausreicht und somit die Qualität der Mischung leidet oder daß die anschließende Mischzeit und somit die für den gesamten Mischzyklus erforderliche Zeit entsprechend erhöht werden muß. Beispielsweise ist es bekannt, daß bei Zugaben von Zinkoxid in die Kautschukmischung Akkumulate (Stippen) in der Mischung verbleiben können, die aufwendig auf Walzen per Hand nachgeschnitten und nachgemischt werden müssen. Derartige Stippen können auch bei anderen Füllstoffen in Abhängigkeit von der Kornhärte auftreten.

Eine Erhöhung der gesamten Zykluszeit bedeutet eine schlechte Auslastung der Innenmischer und zusätzlichen Aufwand für zusätzliche Innenmischer zur Beibehaltung der Produktionsmenge, für zusätzliche Wartung und Montage, für zusätzlichen Raum zur Aufstellung der Innenmischer und somit zur Erhöhung der Produktionskosten.

In der DE-PS 26 16 338 C2 ist ein Innenmischer schematisch dargestellt, bei dem der Stempel eine unkonturierte ebene Stirnfläche aufweist. Auch eine solche Kontur führt bei nicht geschlossenem Stempel aufgrund der orthogonalen Anordnung der nicht konturierten Stirnfläche zu den Seitenwänden des Einfüllkanals ebenfalls zur ausgiebigen toten Zone im Randbereich des Stempels, in denen keine Vermischung bei nicht geschlossnem Stempel erfolgt.

Der Erfindung liegt daher die Aufgabe zugrunde, einen derartigen Innenmischer zu schaffen, mit dem eine bessere Einmischung auch bei nicht geschlossenem Stempel ermöglicht wird.

Die Aufgabe wird erfindungsgemäß durch die Ausbildung eines Innenmischers gemäß den Merkmalen von Anspruch 1 gelöst.

Die Ausbildung der Sattelkontur ermöglicht, daß die effektive Mischzeit erhöht wird. Wie in herkömmlichen Innenmischern üblich, ist unterhalb der Rotoren mittig zu deren Drehachsen ein verschiebbarer Auslaßsattel im Kammergehäuse ausgebildet. Durch die zur Kammer weisende konkave Sattelkontur, mit stumpfem Schnittwinkel der durch die Randpunkte gebildeten Tangenten an die konkave Kontur wird unterhalb des Einlaßstempels zusätzlicher Raum zur Aufnahme des durch die Einfüllöffnung eingegebenen Materials geschaffen, so daß der in der Einfüllöffnung ausgebildete Stempel schneller seine Schließposition einnehmen kann. Wie üblich drehen die parallelen Rotoren derart, daß sie durch den Mittenbereich zwischen den beiden Rotoren von oben nach unten drehen. Das eingefüllte Material muß auf seinem Weg nach unten zum Auslaßsattel einmal den Einflußbereich der Rotoren durchdringen, so daß es durch die Drehbewegung der Rotoren bereits eine erste Mischwirkung erfährt. Die Kontur des Auslaßsattels ermöglicht dabei, daß das nach unten geförderte im konkaven Bereich gesammelte Material durch die Rotorbewegung entlang der konkaven Kontur in die Bewegungsrichtung der Rotoren mitgezogen in eine durch die Kontur des Auslaßsattels und durch die Rotoren gebildeten Spalt eingezogen wird. Diese Ziehbewegung bewirkt ein weitgehend vollständiges Mitnehmen des zu mischenden Materials und bereits ein Mischen bei den ersten Umdrehungen der Rotoren. Auf diese Weise beginnt die effektive Mischzeit bereits sehr früh noch während der Beschickungsphase vom ersten Umlauf der Rotoren an.

Durch die Ausbildung des Innenmischers gemäß den Merkmalen von Anspruch 2 wird bei Erhöhung des Speichervolumens die Keilwirkung zwischen Innenmischer und unter Sattelkontur weiter verbessert, so daß der Einzug des auf dem Sattel befindlichen Materials weiter vereinfacht wird.

Die Ausbildung gemäß den Merkmalen von Anspruch 3 ermöglicht eine weitere Verbesserung des Einzugs durch Führung des Materials entlang der konvexen Nase und der konkaven Kontur in den Einzugsbereich. Das Merkmal von Anspruch 4 ermöglicht einen besonders sicheren Einzugsspalt.

Die Ausbildung der Stirnfläche beiderseits der Ränder gemäß den Merkmalen von Anspruch 6 mit einem von der Kammer wegweisenden konkaven Konturverlauf in einer Schnittebene senkrecht zu den Achsen der Rotoren und mit einer Steigung der Konturlinie im Randbereich unter einem Steigungswinkel α > = 0° zur Verbindungsgeraden der beiden Ränder der Stempelkontur bewirkt, daß das Mischungsmaterial nicht wie bei der an die Kammerkonturen angepaßten Kontur des herkömmlichen Stempels in spitze Ecken im Randbereich der Stempel gepreßt wird. Statt dessen wird eine Kontur gebildet, die Strömungslinien ermöglicht, die den Randbereich im wesentlichen durchziehen und entlang der Seitenwandkontur des Einfüllkanals durch den mit im wesentlichen stumpfem Winkel zwischen Seitenwand und Stempelkontur gebildeten Eckbereich und entlang der konkaven Kontur des Stempels ein Abführen des Materials ins Innere des Mischers aufgrund der durch den Innenmischer erzeugten Sogwirkung ermöglichen.

Durch die Form des Stempels bedingt wird auch im Einfüllraum oberhalb der Rotoren bei halbgeschlossenem Stempel die Mischung in den Randbereichen des Stempels beim Drehen der Rotoren vermischt. Aufgrund der frühzeitigen Vermischung auch in den Randbereichen des Stempels wird der bei noch nicht vollständiger Vermischung erzeugte Gegendruck, der den Stempel nach oben drückt, früher abgebaut, so daß die Beschickungszeit reduziert wird. Der Stempel kann somit frühzeitiger seine geschlossene Stellung einnehmen. Bereits hierdurch wird der für das anschließende Mischen im Innenmischer bei geschlossenem Stempel zur Verfügung stehende Zeitanteil innerhalb eines vorgegebenen Zeitintervalls für den kompletten Mischzyklus erhöht. Da bereits während der Beschickungszeit auch in den Randzonen des Stempels eine Vermischung stattfindet, ist darüber hinaus die Mischung bereits zum Ende der Beschickungszeit, d.h. zu dem Zeitpunkt, in dem Stempel seinen geschlossenen Zustand einnimmt, bereits besser vermischt, so daß auch während der Beschickungszeit bereits eine effektive Mischung stattfindet. Die gesamte zur effektiven Mischung zur Verfügung stehende Zeit wird auch hierdurch erhöht. Aufgrund der Erhöhung der effektiven Mischzeit ist es möglich, die Zykluszeit zu reduzieren oder bei gleicher Zykluszeit wie bisher eine höhere Mischungsqualität sicherzustellen.

Bevorzugt ist eine Ausbildung der Stempelkontur, bei der im Randbereich jeweils die Vorteile der konkaven Ausbildung der Kontur mit Steigungsverlauf von α > = 0° zur Verbindungsgeraden der Ränder zur Ausbildung einer weitgehend totzonenfreien Randzone mit der zum Mischen bei vollständig geschlossenem Stempel optimalen konvexen Stempelkontur, die im wesentlichen dem Mantelverlauf der Außenradien der Rotoren angepaßt ist, verbunden werden. Die konvexe Nase ermöglicht bei geschlossenem Zustand eine sichere Mitnahme des unterhalb des Stempels vorhandenen Mischungsmaterials. Darüber hinaus ermöglicht die konvexe Nase auch bei geöffnetem Stempel, daß das Mischungsmatrial, das in dem bei den Randbereichen entlang von Strömungslinien der konkaven Kontur des Innenmischers folgend bewegt wird, auch im Mittenbereich des Stempels weitgehend totpunktfrei entlang der Strömungslinien den Konturen der Wand des Einfüllkanals, der konkaven Kontur im Randbereich und der konvexen Kontur der Nase folgend in den Innenraum bewegt, vermischt wird.

Somit wird bei nicht vollständig geschlossenem Stempel, d.h. vor Ablauf der vollständigen Beschickungsphase auch bereits ein Einmischen des unterhalb des Stempels befindlichen Materials in das in der Kammer im Einflußbereich der Rotoren befindliche Material ermöglicht. Die Ausbildung gemäß den Merkmalen von Anspruch 7 stellt einen optimierten Randverlauf der Stempelkontur dar. Der stumpfe Winkel, den die Randkontur mit dem Seitenwandverlauf unterhalb des Stempels einschließt, ermöglicht ein optimales Vorbeigleiten und Vermischen des Mischungsmaterials.

Die Ausbildung gemäß den Merkmalen von Anspruch 5 stellt eine bevorzugte Ausbildung des Innenmischers dar, da der Einfüllvorgang hierdurch besonders einfach, wie bei herkömmlichen Innenmischern, schon durch die Schwerkraft der Mischungskomponenten und der Zugaben sowie des Stempels ermöglicht wird.

Die Erfindung wird im folgenden anhand der in den Figuren 1 bis 9 schematisch dargestellten Ausführungsbeispielen näher erläutert.

Hierin zeigen:
- Figur 1: Innenmischer bekannter Art mit teilgeöffnetem Einfüllstempel in einer Querschnittsdarstellung senkrecht zu den Rotoren
- Figur 2: Innenmischer bekannter Art gemäß Figur 1, jedoch mit vollständig geschlossenem Einfüllstempel
- Figur 3: Erfindungsgemäßer Innenmischer mit in einer ersten Ausführungsform mit Stempel teilgeschlossenem Zustand
- Figur 4: Innenmischer gemäß Figur 3 mit vollständig geschlossenem Stempel
- Figur 5: Erfindungsgemäßer Innenmischer mit in zweiter Ausführungsform in geschlossenem Zustand
- Figur 6: Erfindungsgemäßer Innenmischer mit in dritter Ausführungsform in geschlossenem Zustand
- Figur 7: Diagramm zur Darstellung der während des Mischzyklus veränderten Stempelposition
- Figur 8: Innenmischer gemäß Ausführungsbeispiel von Figur 5 mit herkömmlicher Kontur des Einfüllstempels
- Figur 9: Innenmischer gemäß Figur 8 mit weiterer Ausführungsform der Kontur des Auslaßsattels gemäß Figur 3

Die Figuren 1 bis 6, Figur 8 und Figur 9 zeigen jeweils einen Innenmischer mit zwei parallelen in einer horizontalen Ebene angeordneten Rotor 10 bzw. 11, deren Schaufeln 14 bzw. 15 sich in ihrer Drehbewegung überschneiden. Die Rotoren 10 und 11 sind mit ihren paralleln Wellen 12 und 13 in bekannter Weise in einem Mischkammergehäuse 1 drehbar gelagert. Die Schaufeln 14 und 15 der Rotoren erstrecken sich axial entlang der Rotorwellen 10 bzw. 13 durch die gesamte Mischkammer. Mit ihren äußeren Radien beschreiben die Schaufeln 14 bzw. 15 jeweils eine Zylindermantelkontur, die sich im Überschneidungsbereich der Rotorschaufeln 14 und 15 zwischen den Rotorwellen 13 und 14 schneiden. Die innere Kammerwand 2 ist in ihrer Kontur an die durch die äußeren Radien der Rotorwellen 14 und 15 beschriebenen Zylindermantelkontur angepaßt. Die in der Querschnittsdarstellung der Figuren dargestellte linke Kammerwand 3 bildet demtentsprechend eine Teilmantelfläche eines Zylinders, der konzentrisch zur Drehachse der Rotorwelle 12 ausgebildet ist. Die rechte Kammerwand 4 bildet eine entsprechende Teilmantelfläche eines Zylinders, der konzentrisch zur Welle 13 ausgebildet ist. Im Mischungskammergehäuse 1 ist in bekannter Weise oberhalb der Rotoren 14 bzw. 13 mittig zu den Achsen der Rotorwellen 12 bzw. 13 ein Einfüllschacht 5 mit parallelen Schachtwänden 6 und 7 ausgebildet, in dem senkrecht zu einer Ebene durch die Achsen der Rotorwellen 10 und 11 verschiebbar ein Stempel 8 gelagert ist.

Unterhalb der Rotoren 10 und 11 ist im Mischkammergehäuse 1 mittig symmetrisch zwischen den Drehachsen der Rotorwellen 10 und 11 ein Auslaßschacht bekannter Art ausgebildet, der sich ebenso wie der Einfüllschacht 5 axial parallel zu den Rotorwellen 10 und 13 über die gesamte Mischkammer erstreckt. Im Entladeschacht ist in bekannter Weise ein Entladesattel 17 an- und abhebbar gelagert.

Zum Mischen werden die Rotoren 14 und 15 in bekannter Weise derart angetrieben, daß sich ihre Rotorschaufeln 15 bzw. 14 im Bereich zwischen den Rotorwellen 12 und 13 von oben nach unten bewegen.

Figuren 1 und 2 zeigen eine herkömmliche, zum Stand der Technik gehörende Ausbildungsform der Innenkontur 18 des Stempels 8 und der Innenkontur 19 des Sattels 17. In die beiden äußeren zu den Seitenwänden 6 und 7 des Einfüllschachts weisenden Randpunkte 28 bzw. 29 der Stempelkontur in der Querschnittsdarstellung ist zur Verdeutlichung des Konturverlaufs jeweils ein Koordinatensystem eingezeichnet. Im linken Randpunkt 28 ist das Koordinatensystem mit dem Index l und in dem rechten Kantenpunkt 29 mit dem Index r gekennzeichnet. Dabei zeigen die beiden x-Koordinaten Richtungen xₗ und xᵣ in die vom Kammerinnern wegweisende Verschieberichtung des Stempels und die senkrechte y-Koordinaten-Achsen vom jeweiligen Randpunkt 28 und 29 zur Stempelmitte hin.

Wie in Figur 2 bei geschlossenem Stempel 8 und bei geschlossenem Satel 17 zu erkennen ist, ist die innere Stempelkontur 18 sowie die innere Sattelkontur 19 bei herkömmlichen Stempeln so ausgebildet, daß sie im geschlossenen Zustand jeweils eine Fortführung der durch den linken Kammerwandabschnitt 3 und den rechten Kammerwandabschnitt 4 gebildeten Zylindermantelkontur darstellen. Die Zylindermantelkontur 18 ist hierzu zu einer parallel zu den x-Achsen mittig zwischen den beiden Stempelkanten 28 und 29 verlaufenden Geraden spiegelsymmetrisch verlaufend ausgebildet. Ebenso ist der Sattel 17 mit seinem zwischen den Kanten 30 und 31 ausgebildeten linken Konturverlauf 23 und seinem rechten Konturverlauf 24 in diesem Sinne mittensymmetrisch ausgebildet.

Die Beschreibung der Konturverläufe beschränkt sich im folgenden daher jeweils lediglich auf den linken Konturverlauf 20 des Stempels bzw. 23 des Satels. Bereits in den Kantenpunkten 28 bzw. 30 ist die Kontur 20 bzw. 23 von der Kante zur Mitte des Stempels 8 bzw. des Sattels 17 hin mit einer Steigung in Richtung des Mischraums 9 unter Einschluß eines Winkels α beim Stempel bzw. β beim Sattel ausgebildet, wobei die Steigung kontinuierlich zunimmt und erst im Bereich der Mite zwischen den Kanten 28 und 29 bzw. 30 und 31 an denen der linke und rechte Konturverlauf 20 und 21 bzw. 23 und 24 jeweils ineinander überlaufen mit abnehmender Steigung unter Bildung einer zum Mischraum 9 gerichteten Nase 22 bzw. 25 ausgebildet. Somit sind die Konturen 18 und 19 jeweils vollständig auf der zum Mischraum 9 gerichteten Seite der Verbindungslinien 27 bzw. 50 ausgebildet. Die Kontur 18 des Stempels nimmt vollständig negative x-Koordinatenwerte an.

Wie in Figur 2 dargestellt, bilden der Stempel 8 und der Sattel 17 bei geschlossenem Stempel und Sattel in Verbindung mit den Kammerwänden 3 und 4 somit eine den Mischraum 9 umschließende Außenkontur, die im wesentlichen der Hüllkurve zweier sich schneidender Zylinder, deren Zylinderachsen die Drehachsen der Rotorwellen 12 und 13 sind, entspricht.
Im vollständig geschlossenen Zustand von Figur 2 wird das im Mischraum 9 befindliche Kautschukmischungsmaterial beim Drehen der angetriebenen Rotoren vollständig durch Rotorschaufeln erfaßt und vermischt.

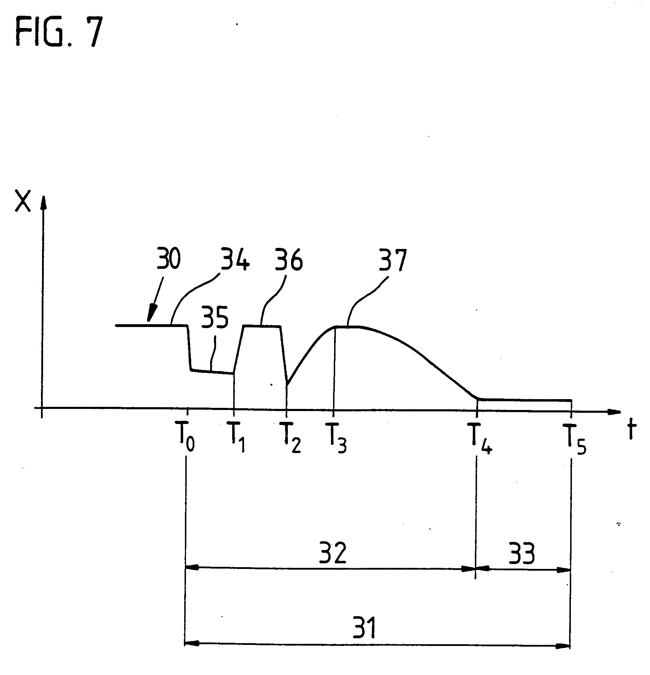

In Figur 7 ist schematisch der Hubweg des Stempels 8 während eines Mischzyklus 31 dargestellt. Zum Beladen des Innenmischers ist der Stempel zunächst angehoben. Der Beschickungsbereich 34 der Hubwegkurve 30 stellt ein maximales Plateau dar. Zum Zeitpunkt t0, der den Beginn des Mischzyklus angibt, wird der Stempel aqbgesenkt, wobei das Kautschukmischungsmaterial weiter nach unten in den Einzugsbereich der Rotorschaufel 14 und 15 gepreßt wird. Die mangelnde Vermischung, die vielen Hohlräume und die möglicherweise auftretende unzureichende Diffusion der Mischung zu diesem Zeitpunkt bewirken, daß der Stempel während des anschließenden Mischens noch nicht seine vollständige Schließstellung erreicht. Der Stempel zeigt ein angehobenes Niveau 35, das langsam abnimmt. Zu einem Zeitpunkt t1 wird der Stempel auf das Niveau 36 angehoben, um weitere Zugaben bekannter Art, beispielsweise Zinkoxid zuzusetzen. Danach wird der Stempel wieder zum Schließen abgesenkt und zum Zeitpunkt t2 weiter gemischt. Aufgrund der Wärme- und Druckentwicklung im Mischraum während des weiteren Mischens wird der Stempel wieder weit abgehoben, bis er zum Zeitpunkt t3 ein Maximum 37 erreicht. Während des weiteren Mischens senkt sich der Stempel langsam ab, so daß er zu einem Zeitpunkt t4 den in Figur 2 dargestellten geschlossenen Stellung erreicht. Diese Stellung hält der Stempel im wesentlichen bis zum Endzeitpunkt t5 des Mischzyklus 31. Danach wird der Sattel 17 beispielsweise durch Absenken geöffnet und die Kammer in bekannter Weise entladen.

Wie in Figur 7 zu erkennen ist, ist die Beschickungsphase 32, die sich zwischen den Zeiten t0 und t4 erstreckt, gegenüber der sich anschließenden eigentlichen Mischphase 33, in der der Stempel den in Figur 2 dargestellten vollständig geschlossenen Zustand einnimmt, sehr groß. Die Beschickungsphase 32 nimmt beispielsweise ein Drittel bis drei Viertel der für den Mischzyklus 31 zur Verfügung stehenden Zeitspanne in Anspruch.

Wie in Figur 1 bei nicht vollständig abgesenktem Stempel zu erkennen ist, kann das Mischungsmaterial unterhalb des Stempels von den Rotoren 15 und 14 entsprechend den durch die Pfeile dargestellten Stromlinien mitgerissen werden, so daß Material, das unmittelbar unterhalb der Spitze des Stempels angeordnet ist, von den Rotoren 13 und 14 in die Mischkammer 9 gezogen wird. In den Randbereichen des Stempels bilden sich jedoch inaktive tote Zonen 26. Das Material in diesen inaktiven toten Zonen wird bei angetriebenem Stempel weder innerhalb desd Einfüllschachtes vermischt noch zum Mischen in den Innenraum gezogen. Erst bei vollständig geschlossenem Stempel gemäß Figur 2 wird dieses Material von den Rotorschaufeln erfaßt und eingemischt. Zum vollständigen Einmischen dieses Kautschukmischungsmat erials und der im Totbereich 26 gesammelten Zugaben steht nur noch der kurze Zeitraum für die eigentliche Mischungsphase 33 zur Verfügung.

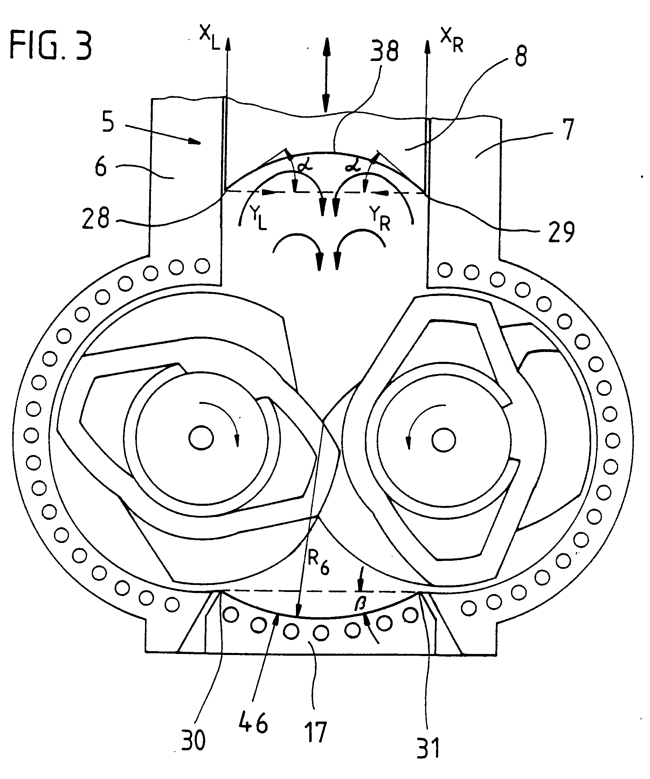

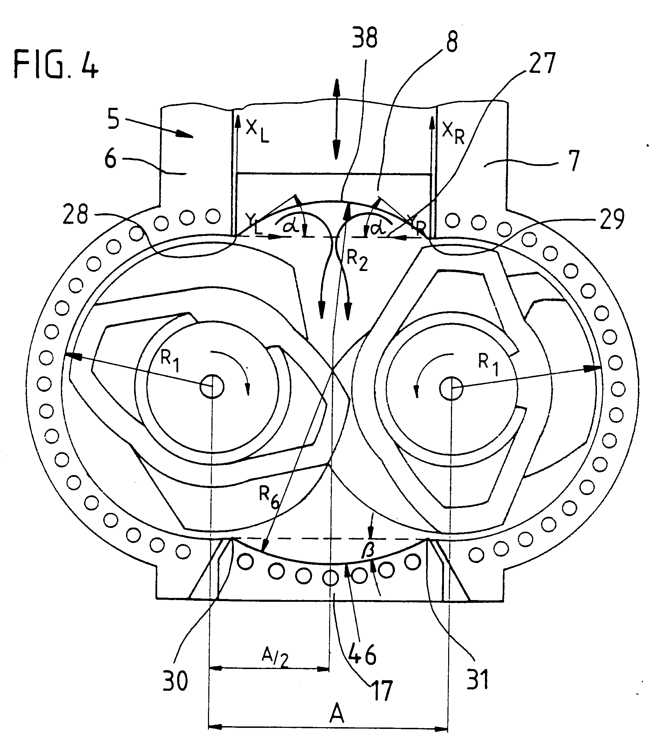

In Figur 3 ist ein erfindungsgemäßes Ausführungsbeispiel dargestellt, bei dem die Innenkammer mit einem Stempel 8 ausgebildet ist, dessen Mischraum 9 weisende Stirnfläche in der Querschnittsdarstellung konkav mit einer Stempelkontur 38 ausgebildet ist. Die konkave Ausbildung erstreckt sich über den gesamten Querschnittsverlauf zwischen den Kanten 28 und 29. Am Beispiel der Figuren 3 und 4 ist die konkave Krümmung durch einen Konturverlauf 38 angezeigt, der einen sich zwischen den Randpunkten 28 und 29 erstreckenden Kreisabschnitt mit Krümmungsradius R2 darstellt. Der Krümmungsmittelpunkt des Radius R2 liegt auf der Mittensenkrechten zu den Achsen der Rotorwellen 12 und 13. Der Krümmungsradius R2 entspricht dem Radius R1 der Innenkontur der Kammerwandabschnitte 3 und 4 um die Achsen der Rotorwellen 12 und 13. Wie in Figur 3 zu erkennen ist, verläuft die Kontur 38 ebenfalls spiegelsymmetrisch zu einer Geraden parallel zu den x-Achsen x_{R} und x_{L} mittig zwischen den Rändern 28 und 29. Die weitereBeschreibung beschränkt sich auch hier auf den linken Konturverlauf in dem linken Koordinatensystem. Bereits im Randpunkt 28 verläuft die Kontur 38 unter Einschluß eines Winkels α > 0 zur Verbindungslinie 27 mit in y-Richtung stetig zunehmendem x-Wert mit kontinuierlich abnehmender steigung bis zur Mitte zwischen den Kanten 28 und 29. Hierdurch ist der zwischen der Seitenwand 6 unterhalb des Stempels und der Kurve 38 an der Kante 28 eingeschlossene Winkel ein stumpfer Winkel. Wie in Figur 3 dargestellt ist, ziehen die angetriebenen Rotorschaufeln 14 und 15, die unterhalb des Stempels eingeschlossene Mischung und die Mischungszugaben auch beim nicht vollständig geschlossenen Zustand des Stempels entlang der durch Pfeildarstellung schematisch angedeuteten Stromlinien der Kontur 38 des Stempels folgend von den Rändern 28 und 29 zum Mittenbereich des Stempels und von da in den Mischraum 9. Der stumpfe Winkel zwischen den Wänden 6 bzw. 7 unterhalb des Stempels zur Kontur 38 an den Rändern 28 und 29 in Verbindung mit dem konkaven Konturverlauf des Stempels 8 bewirkt, daß im Bereich der Ränder 28 und 29 unterhalb des Stempels befindliches Mischungsmaterial und Zugaben auch bei nicht vollständig geschlossenem Stempel 8 in den Mischungskreislauf mit einbezogen werden. In der Hubwegsdarstellung von Figur 7 bedeutet dies, daß bereits in der Beschickungsphase 32 im Abschnitt 35 und 37 das unterhalb der Stempelränder befindliche Mischungsmaterial mit eingemischt wird, so daß ein Großteil des Mischzyklus zum Einmischen genutzt wird. Da das im Mischraum und unterhalb des Stempels befindliche Mischungsmaterial somit bereits früher vermischt wird, beginnt auch die Beruhigungsphase des Abschnitts 37 zu einem früheren Zeitpunkt, so daß die Beschickungsphase 32 auch früher abgeschlossen ist.

Die Ausbildung der zum Kammerinnern weisenden Stirnfläche des Sattels 17 ist konkav mit einer Kontur 46, die einen Kreiskonturabschnitt um einen Radius R6 mit Mittelpunkt auf der Mittelsenkrechten zu den Achsen der Rotorwellen 12 und 13 darstellt. Der Radius R6 ist gleich groß wie der Radius R1. Die Kontur 46 schließt in den Randbereichen 30 und 31 jeweils einen Winkel β zur Verbindungsgeraden 50 ein, wobei der Steigunsverlauf der Kontur 46 von den Rändern 30 und 31 zum Sattelinnern ein kontinuierliches Gefälle bildet. Oberhalb des Sattels 17 bildet sich durch die konkave Ausbildung ein zusätzlicher Raum zwischen den von den Rotorschaufeln während ihrer Umdrehung gebildeten Hüllkurven in Form von Zylindermantelflächen und der Kontur 46, in die das in die Mischkammer eingefüllte Mischungsmaterial absinken kann. Hierdurch erreicht der Stempel 8 früher seine geschlossene Stellung. Die spezielle konkave Ausbildung der Stirnfläche des Sattels mit der Kontur 46 bildet zu den Schaufeln 14 und 15 der Rotoren einen keilförmigen Einzugsspalt. Durch die Keilform wird das zwischen Kontur 46 und den Rotorschaufeln befindliche Kautschukmaterial entlang der Kontur 46 von den angetriebenen Rotorschaufeln zum Mischen eingezogen.

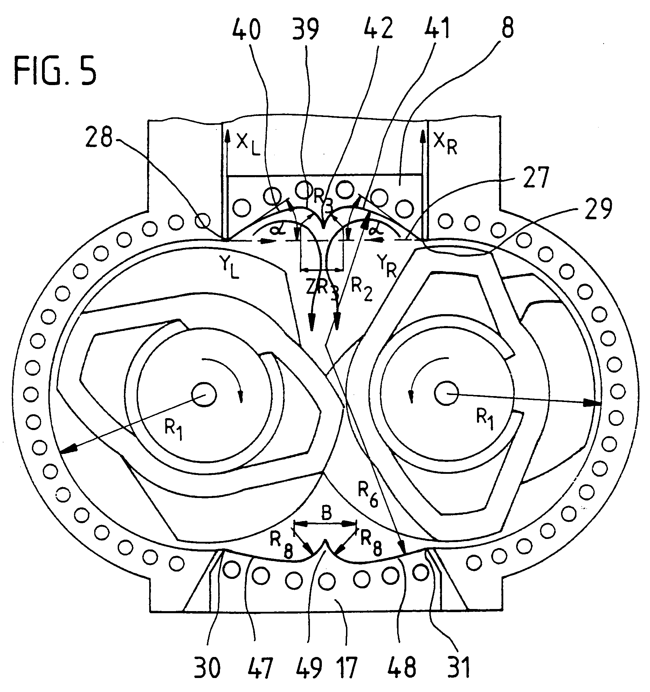

In Figur 5 ist ein Innennmischer mit einem Stempel 8 in geschlossenem Zustand dargestellt, der in alternativer Weise mit einer weiteren erfindungsgemäßen Stempelkontur ausgebildet ist. Im Gegensatz zum Stempel von den Figuren 3 und 4 ist die ansonsten gleichermaßen ausgebildete Kontur im Bereich der Mittellinie zwischen den beiden Rändern 28 und 29 mit einer zum Mischraum hin weisenden Nase 42 ausgebildet. Dabei ist die Kontur jeweils im äußeren Randdrittel aus einem linken Konturverlauf 40 und einem rechten Konturverlauf 41 ausgebildet, die im wesentlichen dem linken und dem rechten Konturverlauf vom Ausführungsbeispiel von Figur 3 bzw. 4 mit dem Krümmungsradius R2 entsprechen. Im inneren dazwischenliegenden Drittel ist die Kontur mit dem Krümmungsradius R3 mit Krümmungsmittelpunkt zwischen Kontur und Verbindungsgerade 27 zum Kammerinnern gekrümmt und bildet hierdurch die Nase 42. Der Stempel 8 gemäß Ausbildung von Figur 5 weist somit einen insgesamt konkaven Konturverlauf auf, wobei die jeweils zwischen Nasenspitze und Rand ausgebildeten Kurvenbereiche konkave Stempelkonturbereiche erzeugen.

Der Sattel ist mit einer Sattelkontur 47 ausgebildet, bei der analog zur Stempelkontur der Sattel mit einer linken konkaven Kontur 47, mit einer rechten konkaven Kontur 48 und mit einer dazwischenbefindlichen Nase 49 ausgebildet ist, die sich in ihrer seitlichen Erstreckung maximal auf das mittlere Drittel der Sattelerstreckung zwischen den Kanten 30 und 31 beschränkt. Entlang der Nase wird das von oben nachgeschobene Kautschukmaterial um die Krümmung der Nase mit dem Krümmungsradius R8 und die Krümmung der seitlichen Bereiche 47 und 48 mit Krümmungsradius R6 geschoben und von der Rotorschaufel entlang des keilförmigen Einzugsspaltes im Bereich der Kanten 30 und 31 eingezogen.

Auch hier bildet der Sattel insgesamt eine konkave Kontur mit nur im engen mittleren Bereich des Sattels ausgebildeter Nase. Darüber hinaus sind in den beiden seitlichen Bereichen 47 und 48 jeweils zwei konkave Bereiche ausgebildet, die sich jeweils in den seitlichen Bereichen bis zur Nase hin erstrecken.

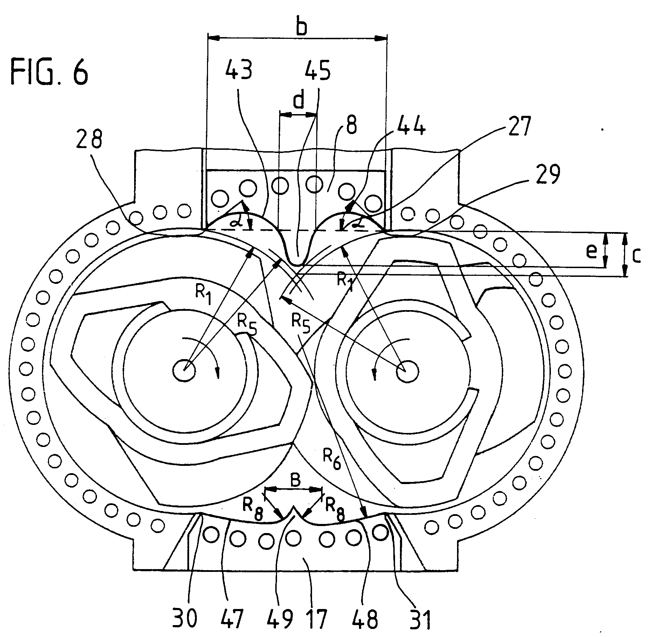

Im Ausführungsbeispiel von Figur 6 ist die Nase gegenüber dem Ausführungsbeispiel von Fgur 5 mit weiter ins Kammerinnere reichender Nasenspitze 45 ausgebildet. Auch hier ist zu erkennen, daß der linke Konturverlauf 43 und der rechte Konturverlauf 44 jeweils einen sich von den Rändern 28 und 29 bis fast zur Mitte des Stempels erstreckenden konkaven Bereich darstellen und lediglich im Bereich der Stempelmitte innerhalb des mittleren Drittes d des Abstandes b zwischen den Rändern 28 und 29 die Nase 45 gebildet ist. Es ist denkbar, die Nase 45 so weit ins Innere der Mischkammer zu erstrecken, daß die Nase 45 bei geschlossenem Stempel einen Radius R5 um die Drehachse der Rotorwellen berührt, der mindestens so groß wie der Radius R1 der Mischkammerwandabschnitte 3 bzw. 4 ist, so daß ein spielbehaftetes Vorbeigleiten der Rotorschaufeln bei geschlossenem Stempel gesichert ist. Der Konturverlauf der Ausführungsbeispiele von Figuren 5 und 6 ermöglichst dabei ein Führen des Mischungsmaterials von den Rändern 28 und 29 weg entlang der Stempelkontur auch beim nicht vollständig geschlossenen Stempel unter Führung des Materials durch die Stempelkontur in den sicheren Einzugsbereich durch die Rotoren.

Es ist sinnvoll, die Nase maximal um einen Abstand e über die Verbindungslinie zwischen den Rändern 28 und 29 zu verlängern, der ca. 1/3 des Abstands c beträgt, wobei c der Abstand zwischen dem Schnittpunkt der Radien R5 und der Verbindungslinie darstellt, so daß beide Materialströme noch oberhalb der Rotoren verwirbelt werden können.

Entsprechend den individuellen Erfordernissen an den jeweiligen Innenmischer und an die Kautschukmischungen ist es möglich, die Nase individuell in ihrer Kontur auszubilden, so daß durch eine derartige Ausgestaltung, falls erforderlich, verhindert werden kann, daß inaktive Zonen im Mittenbereich des Stempels bei nicht geschlossenem Stempel entstehen

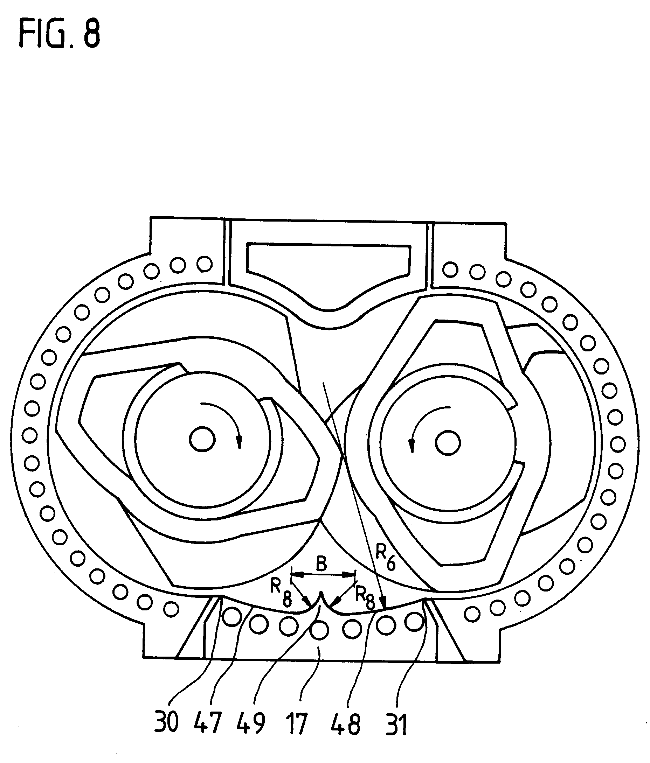

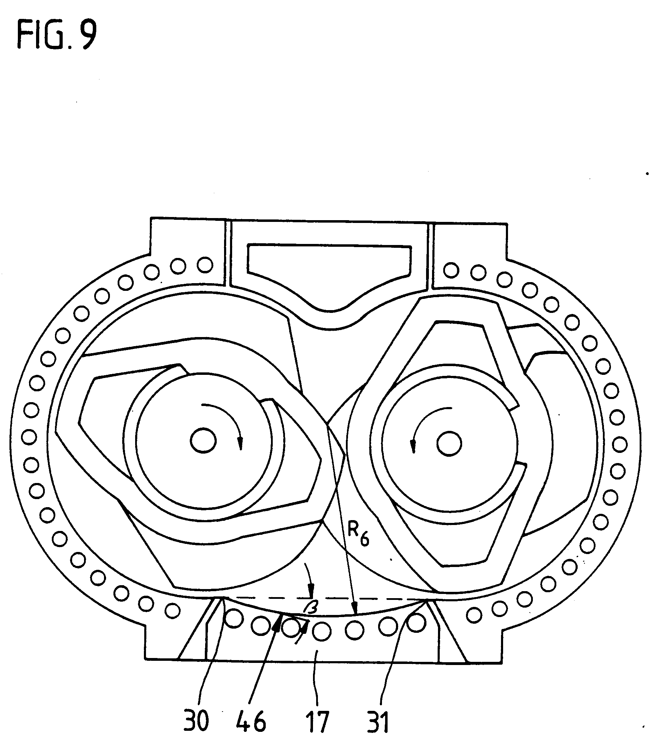

Auch wenn die Sattelkonturen in Fig. 3, 4, 5, 6 jeweils in Verbindung mit entsprechender Stempelkontur dargestellt sind, ist eine derartige Sattelkonturausbildung ebenso in Verbindung mit den anderen dargestellten Ausführungsbeispielen für die Stempelkontur möglich. So ist es beispielsweise denkbar, die Sattelkontur gemäß Fig. 3 und die Stempelkontur gemäß Fig. 5 auszubilden. Die Sattelkonturen sind, wie in den Fig. 8 und 9 dargestellt ist, ebenso mit herkömmlicher Stempelkontur, wie sie beispielsweise in Fig. 1 und 2 dargestellt ist, denkbar. Auch hier wird das Schließen des Stempels durch die Sattelkontur beschleunigt und das Mischungsmaterial frühzeitig von den Rotoren erfaßt.

Dabei ist es denkbar, in allen erfindungsgemäßen Ausführungsbeispielen die Steigung α in der Kontur im Randbereich an den Kanten des Stempels mit 0° auszubilden und die jeweilige Innenkontur 38 bzw. 39 des Stempels vom jeweiligen Rand zur Mitte hin mit zunehmendem Winkel α mit ihrem konkaven Bereich auszubilden. Ebenso ist es denkbar, am Sattel 17 der Ausführungsbeispiele von Figuren 8 und 9 den Winkel β im Randbereich an den Kanten 30 und 33 mit 0° auszubilden und ausgehend von den Kanten 30 und 31 zum Sattelinnern hin mit zunehmendem Winkel β mit ihrem konkaven Bereich auszubilden.

Der Innenmischer kann ebenso gut ein Tangentialmischer sein, bei dem sich die Rotorschaufeln in ihrer Bewegungsbahn nicht überschneiden.

Der Antrieb zum Verschieben des Stempels ist hydraulisch, pneumatisch oder in sonstiger geeigneter Weise ausgebildet.

Die Rotorwellen 11, 12 können beispielsweise jeweils aus einer durchgehenden Welle oder jeweils aus zwei konzentrischen in Längsrichtung voneinander beabstandeten Wellenzapfen ausgebildet sein.

### Bezugszeichenliste

- 1: Innenmischkammergehäuse
- 2: innere Kammerwand
- 3: Kammerwandabschnitt
- 4: Kammerwandabschnitt
- 5: Einfüllschacht
- 6: Wand
- 7: Wand
- 8: Stempel
- 9: Mischraum
- 10: Mischrotoren
- 11: Mischrotoren
- 12: Rotorwelle
- 13: Rotorwelle
- 14: Rotorschaufel
- 15: Rotorschaufel
- 16: Auslaßschacht
- 17: Entladesattel
- 18: Innenkontur-Stempel
- 19: Innenkontur-Sattel
- 20: linker Konturverlauf
- 21: rechter Konturverlauf
- 22: Nase
- 23: linker Konturverlauf
- 24: rechter Konturverlauf
- 25: Nase
- 26: tote Zone
- 27: Verbindungsgerade
- 28: Rand
- 29: Rand
- 30: Hubwegskurve
- 31: Mischzyklus
- 32: Beschickungsphase
- 33: Mischphase
- 34: Beschickung
- 35: Mischen
- 36: Zugabe
- 37: Mischen
- 38: Innenkontur-Stempel
- 39: Innenkontur-Stempel
- 40: linker Konturverlauf
- 41: rechter Konturverlauf
- 42: Nase
- 43: linker Konturverlauf
- 44: rechter Konturverlauf
- 45: Nase
- 46: Innenkontur-Sattel
- 47: linke Kante
- 48: rechte Kante
- 49: Nase
- 50: Verbindungsgerad

## Patentansprüche

1. Innenmischer zur Verarbeitung von Kautschuk- oder von kautschukähnlichen Kunststoffmischungen,
- mit einer von einem Kammergehäuse begrenzten Mischkammer,
- mit zwei in der Mischkammer im wesentlichen parallel zueinander ausgerichteten Rotoren,
- mit einer im Kammergehäuse im wesentlichen oberhalb mittig zwischen den Rotorwellen ausgebildeten Einfüllöffnung,
- mit in der Einfullöffnung beweglich anhebbar und absenkbar ausgebildetem Stempel zum Öffnen und Schließen der Einfüllöffnung,
- mit unterhalb der Rotoren im wesentlichen mittig zwischen den Drehachsen der Rotoren ausgebildetem zum Öffnen und Schließen des Kammergehäuses bewegbarem Auslaßsattel,
- wobei die Kontur des Sattels in Schließstellung des Sattels in einer Schnittfläche im wesentlichen senkrecht zu den Drehachsen der Rotoren an der zur Kammer weisenden Stirnfläche des Sattels derart ausgebildet ist, daß sie von den beiden Rändern der Stirnfläche zur Sattelmitte hin jeweils einen von der Kammer wegweisenden konkaven Konturenverlauf einnimmt und an den Rändern der Stirnfläche einen Winkel β größer oder gleich 0° zur Verbindungsgeraden der beiden Ränder einschließt.

2. Innenmischer gemäß den Merkmalen von Anspruch 1
- wobei der Sattel im geschlossenen Zustand der Kammer in einer Schnittfläche im wesentlichen senkrecht zu den Drehachsen der Rotoren eine Kontur der zur Kammer weisenden Stirnfläche des Sattels aufweist, die von den beiden Rändern zur Sattelmitte hin an den Rändern des Sattels einen von der Kammer wegweisenden, sich zwischen den beiden Rändern erstreckenden konkaven Verlauf einnimmt, wobei die Kontur an den Rändern im wesentlichen einen Winkel β > 0° zur Verbindungslinie der beiden Ränder einschließt, wobei die konkave Krümmung insbesondere mit kreisförmiger Krümmung um einen Krümmungsmittelpunkt, der auf der Mittelsenkrechten zwischen den Rotoren liegt, ausgebildet ist, wobei insbesondere der Krümmungsradius der konkaven Krümmung kleiner oder gleich dem Radius der Innenmischerrotoren ausgebildet ist.

3. Innenmischer gemäß den Merkmalen von Anspruch 1,
- wobei der Sattel an seiner zur Kammer weisenden Stirnfläche des Sattels in seiner Schließstellung in einer Schnittfläche im wesentlichen senkrecht zur Drehachse der Rotoren mit einer Kontur ausgebildet ist, die von den beiden Rändern zur Sattelmitte hin an den Rändern des Sattels jeweils einen von der Kammer wegweisenden Verlauf einnimmt und an den Rändern einen Winkel β > = 0° zur Verbindungsgeraden der beiden Ränder einschließt und von den Rändern zur Mitte hin jeweils in einen konkaven Bereich übergeht, wobei zwischen den beiden konkaven Bereichen in der Mitte der Sattelstirnfläche die Kontur mit einer zur Kammer gerichteten Nase konvex ausgebildet ist, wobei sich die Nase bei geschlossenem Sattel maximal so weit erstreckt, daß sie in spielbehafteten Berührungskontakt mit dem Rotorradius gelangt.

4. Innenmischer gemäß den Merkmalen von Anspruch 3,
- wobei der Winkel β > 0° ist.

5. Innenmischer gemäß den Merkmalen von einem und mehreren der vorangegangen Ansprüche,
- wobei die Rotoren im wesentlichen horizontal ausgerichtet nebeneinander angeordnet sind und bei der insbesondere die Einfüllöffnung oberhalb der nebeneinander angeordneten Rotoren angeordnet ist und der Stempel im wesentlichen senkrecht von oben nach unten verschiebbar ausgebildet ist.

6. Innenmischer gemäß den Merkmalen von einem oder mehreren der Ansprüche 1 bis 4 und 5,
- wobei oberhalb der Rotoren im wesentlichen mittig zu den Rotoren der obere Stempel im Kammergehäuse aus der unteren Schließstellung in eine obere Öffnungsstellung und zurück verschiebbar ausgebildet ist,
- wobei die Kontur des Stempels in Schließstellung des Stempels in einer Schnittfläche im wesentlichen senkrecht zu den Drehachsen der Rotoren an der zur Kammer weisenden Stirnfläche des Stempels derart ausgebildet ist, daß sie von den beiden Rändern der Stirnfläche zur Stempelmitte hin jeweils einen von der Kammer wegweisenden konkaven Konturenverlauf einnimmt und an den Rändern der Stirnfläche einen Winkel α größer oder gleich 0° zur Verbindungsgeraden der beiden Ränder einschließt.

7. Innenmischer gemäß den Merkmalen von Anspruch 6,
- wobei der Winkel α größer 0° ausgebildet ist und der Krümmungsradius der Stempelkontur größer oder gleich dem Radius der Rotoren ausgebildet ist.
